Europäisches Patentamt

European Patent Office

Office européen des brevets

(11) Publication number: **0 167 257**
**B1**

(12) **EUROPEAN PATENT SPECIFICATION**

(45) Date of publication of patent specification: **22.03.89**

(21) Application number: **85303608.5**

(22) Date of filing: **22.05.85**

(51) Int. Cl.⁴: **G 01 F 23/24,** F 22 B 37/46,
F 24 H 9/20

(54) Boiler water level monitoring.

(30) Priority: **01.06.84 US 616101**

(43) Date of publication of application:
**08.01.86 Bulletin 86/02**

(45) Publication of the grant of the patent:
**22.03.89 Bulletin 89/12**

(84) Designated Contracting States:
**BE DE FR GB NL**

(56) References cited:
**DE-A-2 840 848**
**DE-A-3 010 721**
**DE-A-3 042 995**
**US-A-4 360 738**
**US-A-4 390 793**

(73) Proprietor: **HONEYWELL INC.**
Honeywell Plaza
Minneapolis Minnesota 55408 (US)

(72) Inventor: **Bartels, James I.**
109th 13th Street
Hudson Wisconsin 54016 (US)

(74) Representative: **Frohwitter, Bernhard, Dipl.-Ing.**
Bardehle-Pagenberg-Dost-Altenburg & Partner
Patent- und Rechtsanwälte Galileiplatz 1
8000 München 80 (DE)

Courier Press, Leamington Spa, England.

# Description

The present invention relates to systems for monitoring water level, particularly for use in boilers.

Many such systems utilize a probe which completes an electric circuit through the boiler water to sense the presence or absence of water at the level of the probe. A simple sensing circuit is impractical, because of the foaming, boiling, and movement of the water when the boiler is in use. Thus brief interruptions of the circuit through the water can occur, and if these are responded to, nuisance shut-downs of the boiler system can occur. It has been proposed to overcome such problems by the use of a fixed time delay mechanism; US—A—4 360 738 shows such a system using a fixed electronic type timer.

We have found that in some applications, the use of a fixed time delay can cause unsatisfactory operation.

Accordingly, the present invention provides a low water sensing system for a boiler having the features as claimed by claim 1.

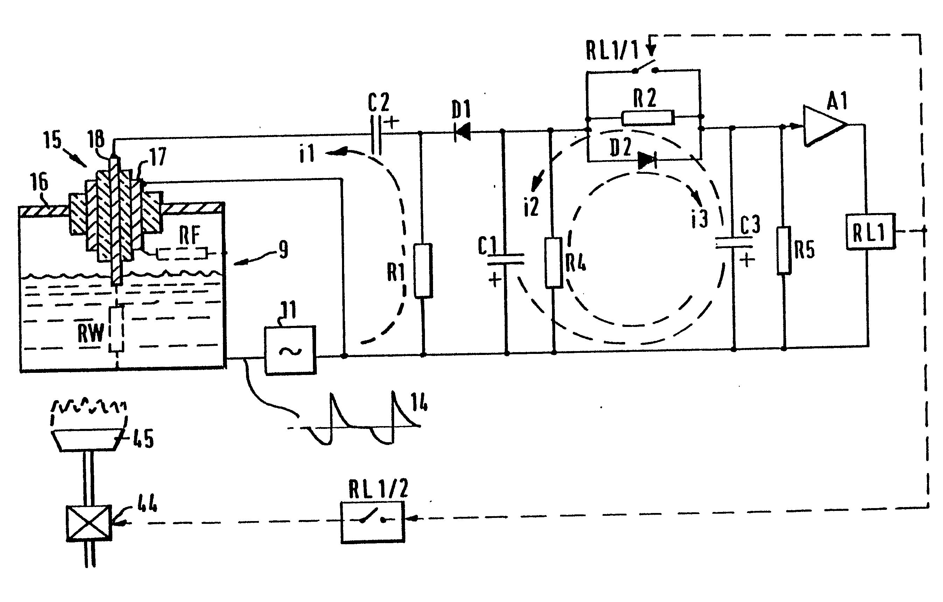

A boiler water level monitoring system embodying the invention will now be described, by way of example, with reference to the drawing, which is a circuit diagram of the system.

Referring to the drawing, a boiler system is shown symbolically as a water boiler 9 heated by a burner 45 which is fed through a fuel valve 44. The boiler 9 has a probe 15, which may conveniently be of the type shown in US—A—4 027 172, having a boiler shell earth at 16, a guard ring (which is optional) 17, and a probe element 18. When the water level is above the probe level, a circuit is completed between the probe element 18 and the boiler shell 16, as indicated by phantom resistor Rw—a resistanc value of around 4 kω is typical for this. The occurrence of a resistive path between the guard ring 17 and the boiler shell 16, as indicated by phantom resistor Rf, indicates a fault, which can be detected in known manner.

The probe 15 is driven by an AC source 11, which may produce sine waves or square waves but preferably produces waves of the waveform shown in 14. As explained in US—A—4 356 406, this waveform gives low electrolysis and good cleaning. The output from the probe element 18 is sensed by the circuitry shown, which can conveniently be regarded as a combination of three current loops i1, i2, and i3.

Assume that the system is being turned on and that the water level is high. Then the source 11 will be connected through the water resistance Rw to the current loop i1, and current will flow through diode D1 to charge capacitors C1 and C2 on negative half-cycles of the AC from source 11 (negative at point 16 relative to point 17). On the positive half-cyclss, capacitor C2 discharges back through resistor R1, so that the total conduction is the same on each half-cycle. The capacitor C2 acts to block any DC flow. Resistor R1 sets the sensitivity of the system, and its resistance is chosen relative to the resistance RW. Thus the current loop i1 acts to charge capacitor C1.

On capacitor C1 becoming charged, current flow in the loop i2 begins, current flowing from capacitor C1 to charge capacitor C3 through resistor R2. The time constant of this loop is long—a value of 20 s is suitable. This means that the charging of C3 is due mainly to charge transfer from C1, with little direct charging from the source 11.

When the voltage on capacitor C3 becomes high enough, indicating that water has been present for a preset length of time, amplifier A1 changes state and energizes a relay winding RL1. This closes a relay contact RL1/2 in the boiler control system to open the fuel valve 44 open and start heating the boiler. It also closes a relay contact RL1/ which shunts the resistor R2 in the current loop i2; this changes the characteristics of that current loop, by which capacitor C3 is kept charged from C1. This is the normal operating mode of the system for as long as the water level is high.

If the water level falls below the probe 15, current stops flowing in the loop i1, capacitor C1 gradually loses its charge, and the charging of capacitor C3 through the loop i2 will also cease. At this point, the loop i3 becomes significant. This loop provides a discharge path for capacitor C3, through resistor R4 and diode D2 (so that this discharge path is not affected by whether relay contact RL1/1 is open or closed). Resistor R5 is very large, but also provides a small portion of the discharge path for C3.

Of course, when the water level falls below the probe 15 and the charge on C3 falls in consequence below the switching point of amplifier 36, the relay RL1 will be de-energized. Contacts RL1/2 will open, closing the fuel valve 44, and contact RL1/1 will open, resetting the timing constant of the current path i2.

## Claims

1. A low water sensing system for a boiler, comprising a boiler probe (15) energized by an AC source (11) and coupled to sensing circuitry (C2 to RL1) which rectifies and smooths the AC signal coupled through the probe when the water level is high and includes an output relay (RL1) which controls the boiler heating fuel (44), characterized by a first capacitor (C1) charged by the rectified AC signal, the sensing circuitry including a charging/discharging impedance (R2, D2, RL1/1) controlled by the output relay, the impedance including a first resistor (R2) of high value to controllably transfer energy from the first capacitor to a second capacitor (C3) for actuating the output relay (RL1) upon the detection of water for a variable period of time.

2. System according to claim 1 characterized in that the charging/discharging impedance further includes a contact (RL1/1) of the relay (RL1) in parallel to the first resistor (R2), the relay contact shorting out the first resistor when the relay is actuated, to allow direct transfer of energy from the first (C1) to the second capacitor (C2).

3. System according to claim 2 characterized by a second resistor (R4) provided in parallel with the first capacitor (C1) and by a diode (D2) provided in parallel with the first resistor (R2) and the relay contact (RL1/1), to provide the second capacitor (C3) with a discharge path upon the loss of water in the boiler at the boiler probe.

## Patentansprüche

1. Wasserstandsüberwachung für einen Kessel, mit einem Kesselfühler (15), der von einer Wechselstromquelle (11) eingeschaltet wird und mit einer Meßschaltung (C2 bis RL1) gekoppelt ist, welche das durch den Fühler eingekoppelte Wechselstrom-Signal gleichrichtet und glättet, wenn der Wasserpegel hoch ist, und ein Ausgangsrelais, (RL1) aufweist, welches den Kessel-Brennstoff (44) steuert,
gekennzeichnet durch einen ersten Kondensator (C1), welcher durch das gleichgerichtete Wechselstrom-Signal geladen wird, wobei die Meßschaltung eine Lade Entlade-Impedanz (R2, D2, RL1/1) aufweist, die durch das Ausgangsrelais gesteuert wird, wobei die Impedanz einen ersten Widerstand (R2) von hohmem Wert aufweist, um eine Energie von dem ersten Kondensator auf den zweiten Kondensator (C3) steuerbar zu übertragen, um das Ausgangsrelais (RL1) bei der Erfassung von Wasser für eine veränderbare Zeitdauer zu betätigen.

2. System nach Anspruch 1, dadurch gekennzeichnet, daß die Lade/Entlade-Impedanz ferner einen Kontakt (RL1/1) des Relais (RL1) parallel zu dem ersten Widerstand (R2) aufweist, wobei der Relaiskontakt den ersten Widerstand kurzschließt, wenn das Relais betätigt wird, um einen Direktübertragung von Energie von dem ersten Kondensator (C1) auf den zweiten Kondensator (C2) zu ermöglichen.

3. System nach Anspruch 2, gekennzeichnet durch einem zweiten Widerstand (R4), der parallel zu dem ersten Kondensator (C1) vorgesehen ist, und durch einen Diode (D6, die parallel zu dem ersten Widerstand (R2) und dem Relaiskontakt (RL1/1) vorgesehen ist, um den zweite Kondensator (C3) mit einem Entladungspfad bei dem Verlust von Wasser in dem Kessel an dem Kesselfühler zu versehen.

## Revendications

1. Système de détection d'un faible niveau d'eau pour une chaudière, comportant une sonde (15) fixée à la chaudière et excitée par une source à courant alternatif (11) et accouplée à circuit de détection (C2 à RL1), qui redresse et lisse le signal à courant alternatif transmis par la sonde lorsque le niveau de l'eau est élevé et inclut un relai de sortie (RL1), qui commande le combustible (14) de chauffage de la chaudière, caractérisé par un premier condensateur (C1) chargé par le signal à courant alternatif redressé, le circuit de détection incluant une impédance de charge/décharge (R2, D2, RL1/1) commandé par le relai de sortie, et l'impédance comprenant une première résistance (R2) possédant une valeur résistive élevée et servant à transférer, d'une manière pouvant être commandée, une énergie depuis un premier condensateur à un second concensateur (C3) pour l'activation du relai de sortie (RL1) lors de la détection de l'eau pendant un intervalle de temps variable.

2. Système selon la revendication 1, caractérisé en ce que l'impédance de charge/décharge comprend en outre un contact (RL1/1) du relai (RL1) branché en parallèle avec la première résistance (R2), le contact du relai court-circuitant la première résistance lorsque le relai est activé, de manière à permettre un transfert direct d'énergie depuis le premier condensateur (C1) au second condensateur (C2).

3. Système selon la revendication 2, caractérisé par une seconde résistance (R4) disposée en parallèle avec le premier condensateur (C1), et par une diode (D2) branchée en parallèle avec la première résistance (R2) et le contact de relai (RL1/1), de manière à former pour le second condensateur (C3) un trajet de décharge lors de l'absence d'eau dans la chaudière au niveau de la sonde de cette dernière.